# EUROPEAN PATENT APPLICATION

(11) **EP 4 307 811 A1**
(43) Date of publication of application: **17.01.2024**
(21) Application number: 22184013.5
(22) Date of filing: 11.07.2022
(51) Int. Cl.: H04W 72/08, H04W 72/04, H04W 16/14, H04W 72/12

(54) **VEHICLE, USER DEVICE, APPARATUS, COMPUTER PROGRAM, AND METHOD FOR MITIGATION OF INTERFERENCE ON AN ULTRA-WIDEBAND APPLICATION**

(71) Applicant: Bayerische Motoren Werke Aktiengesellschaft, 80809 München (DE)
(72) Inventor: Kuelzer, Daniel, 80799 München (DE); Mourad, Alaa, 80995 München (DE)

(57) **Abstract**

Embodiments of the present disclosure relate to a vehicle, a user device, an apparatus, a computer program, and a method for mitigation of interference on a UWB application. The method (100) comprises obtaining (110), using a UWB receiver, information on a radio signal which is suitable to interfere with the UWB application and adjusting (120) the UWB application based on the information on the radio signal such that interference with the radio signal is at least mitigated.

## Description

Embodiments of the present disclosure relate to a vehicle, a user device, an apparatus, a computer program, and a method for mitigation of interference on an ultra-wideband (UWB) application. In particular, the present disclosure relates to a concept for mitigation of interference by communication in a wireless local area network on the UWB application.

In vehicles, communication plays an increasingly important role. For this, vehicles may use several communication technologies. Hence, vehicles may be equipped with various communication technologies, e.g., WLAN (wireless local area network) technology, Bluetooth Low Energy (BLE), and UWB. In particular, vehicles may use WLAN technology according to the Wi-Fi 6E (6 GHz) standard by the Institute of Electrical and Electronics Engineers (IEEE) which is designed to operate in license-exempt bands between 1 and 7.125 GHz, including the 2.4 and 5 GHz bands as well as the much wider 6 GHz band. However, the use of Wi-Fi 6E may cause (in-band) interference with UWB applications of the vehicle. Interference may cause data loss and/or malfunctions. In practice, interference, e.g., may cause that functions using UWB, e.g., locking/unlocking the vehicle by a smartphone, UWB ranging, and/or presence detection, may not work properly or not at all.

In some applications of WLAN technology, it is provided that a WLAN router applies "listen before talk" (LBT) techniques, i.e., that the WLAN router checks whether a WLAN channel to be used is interference-free, before using the WLAN channel. However, the transmission power of UWB signals and the sensitivity of WLAN devices typically is too low to detect potentially interfered UWB applications when applying LBT. Accordingly, UWB applications are not detected by LBT of WLAN devices. So, LBT by WLAN devices does not help to mitigate interference on UWB applications.

Hence, there may be a demand for an improved concept for mitigation of interference on UWB applications.

This demand may be satisfied by the subject-matter of the appended independent and dependent claims.

Embodiments are based on the finding that, contrary to WLAN routers, UWB receivers are sensitive enough to detect WLAN and UWB signals. One basic idea of the present disclosure is to apply principles of LBT to a UWB device in order to detect radio signals, e.g., from a WLAN device currently or potentially interfering with a UWB application (e.g., for ranging or presence detection). In practice, multiple UWB channels may be available for the UWB application, one or some of which are interfered and one or some of which are interference-free (i.e., not interfered). One proposed solution for interference mitigation in such cases is to determine, using a UWB receiver of the UWB device, whether a UWB channel is interfered and, if so, select or switch to another UWB channel for the UWB application. Another proposed solution is to reschedule the UWB application, e.g., switch to an alternative time slot or ranging round for the UWB application. In this way, e.g., interference with WLAN applications in vehicles may be avoided or at least mitigated.

Embodiments provide a method for mitigation of interference on an ultra-wideband (UWB) application. The method comprises obtaining, using a UWB receiver, information on a radio signal which is suitable to interfere with the UWB application. Further, the method comprises adjusting the UWB application based on the information on the radio signal such that interference with the radio signal is at least mitigated. In this way, undesired influences by the radio signals on the UWB application, e.g., malfunctions, errors, and/or failures may be avoided or at least reduced. In particular, this allows to avoid or mitigate interference with radio signals from external devices that cannot be controlled for coordination with the UWB application such that interference is mitigated or avoided.

In some embodiments, obtaining the information on the radio signal comprises obtaining the information on the radio signal prior to executing of the UWB application. This way, potential interference may be anticipated such that the UWB application can be adjusted before its execution. This, in some examples, allows to completely avoid interference with the radio signal.

Optionally, obtaining the information on the radio signal comprises obtaining the information on the radio signal while executing the UWB application. This, e.g., allows to adapt the UWB application during its execution in order to avoid or mitigate further interference with the radio signal.

In some embodiments, the UWB application comprises a UWB communication session between a vehicle and a user device. In such embodiments, adjusting the UWB application may comprise configuring the UWB communication session based on the information on the radio signal. In this way, (potential) data or information loss in the UWB communication may be avoided or at least reduced.

In practice, a first and at least one second UWB channel may be available for the UWB communication session. In this case, the information on the radio signal may comprise information on an interference of the radio signal with at least one of the first and the second UWB channel. Configuring the UWB communication session, then, may comprise selecting one of the first and the second UWB channel for the UWB communication session based on the information on the interference with at least one of the first and the second UWB channel. This, e.g., allows to avoid interfered UWB channels and/or to select an interference-free or less interfered UWB channel for less data or information loss in the UWB communication session.

In some embodiments, adjusting the UWB application comprises rescheduling the UWB application based on the information on the radio signal. In some applications, this provides even less interference by the radio signal.

In some embodiments, the method further comprises obtaining information on a first time slot for the UWB communication session within a frame including the first and at least one alternative second time slot for the UWB communication session. In such cases, the method may further comprise obtaining, based on the information on the radio signal and the first time slot, information on interference of the radio signal with the first time slot. Then, configuring the UWB communication session may comprise selecting the first or the second time slot for the UWB communication session based on the information on the interference with the first time slot. In this way, a less interfered time slot may be selected for the UWB communication in order to avoid or further reduce data or information loss in the UWB communication session.

In some applications, the UWB communication session includes or corresponds to a UWB ranging session. In such applications, the frame may be a so-called "ranging block" and the time slots so-called "ranging rounds". Accordingly, the method may further comprise obtaining information on a first ranging round for the UWB ranging session within a ranging block including the first and at least one alternative second ranging round for the UWB ranging session. The method may further comprise obtaining, based on the information on the radio signal and the first ranging round, information on interference of the radio signal with the first ranging round. Then, configuring the UWB communication session may comprise selecting the first or the second ranging round for the UWB ranging session based on the information on the interference with the first ranging round.

In applications, the radio signal may be a wireless local area network (WLAN) signal.

In some embodiments, the information on the radio signal comprises information on a level of interference. In such cases, adjusting the UWB application may comprise adjusting the UWB application based on the information on the level of interference. In some cases, e.g., the level of interference is small enough such that, without any adjustments of the UWB application, interference by the radio signal is acceptable. So, in this way, unnecessary adjustments of the UWB application may be avoided.

In applications, an embodiment of the method is executed by the vehicle and/or the user device.

Further embodiments provide a computer program (product) having a program code for performing an embodiment of the proposed method, when the computer program is executed on a computer, a processor, or a programmable hardware component.

Other embodiments provide an apparatus comprising one or more interfaces for communication and a data processing circuit which is configured to control the one or more interfaces and execute, using the one or more interfaces, an embodiment of the proposed method.

Further embodiments provide a user device or a vehicle comprising the proposed apparatus.

Some examples of apparatuses, methods and/or computer programs will be described in the following by way of example only, and with reference to the accompanying figures, in which
Fig. 1 shows a flow chart schematically illustrating an embodiment of the proposed method for mitigation of interference on a UWB application;
Fig. 2 shows an exemplary use case of the proposed concept; and
Fig. 3 shows a block diagram schematically illustrating an apparatus according to the proposed concept.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Vehicles may be equipped with different technologies for communication and other functions. For example, according to a standard of the Car Connectivity Consortium (CCC-TS-101, Version 1.0/1.1) vehicles may be equipped with BLE as well as UWB for digital vehicle access, i.e., accessing vehicles using a personal communications device (e.g., mobile phone, tablet, smartwatch, personal computer, and/or the like). As well, vehicles may be equipped with WLAN technology. However, WLAN technology operating according to the Wi-Fi 6E (6 GHz) standard by IEEE may interfere with UWB applications, e.g., for ranging or presence detection. In particular, Wi-Fi 6E may, in practice, interfere with UWB channel 5 having center frequency 6 489.6 MHz and 499.2 MHz bandwidth. Hence, UWB applications of a vehicle, such as UWB ranging, may be interfered by WLAN signals from a wireless access point or router aboard the (same) vehicle or other vehicles.

In communication via WLAN, LBT is applied for interference mitigation. However, WLAN devices are not sensitive enough and the transmission power of UWB signals too weak for this in order to mitigate interference of WLAN signals with UWB applications using LBT in WLAN devices.

Hence, there may be a demand for an improved concept of mitigation of interference of UWB applications by a radio signal. This demand may be at least partly satisfied by the subject-matter of the appended independent and dependent claims. The claimed subject-matter should be described in more detail below with reference to the appended drawings.

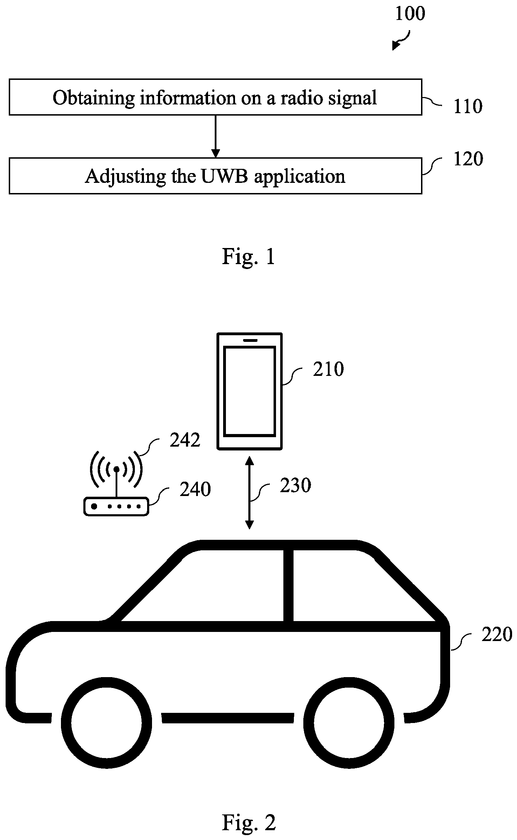

Fig. 1 shows a flow chart schematically illustrating an embodiment of a method 100 for mitigation of interference on a UWB application.

In context of the present disclosure, UWB can be understood as technology for transmitting information across a wide bandwidth (greater than 500 MHz) or as antenna transmission for which emitted signal bandwidth exceeds the lesser of 500 MHz or 20% of the arithmetic center frequency (definition of the Federal Communications Commission and the International Telecommunication Union). The UWB application can be any function, service, or other application using UWB. In practice, method 100 may be applied in vehicles and the UWB application may comprise a UWB communication session between a vehicle and a user device, as laid out in more detail later.

Interference results, for example, from superimposition of UWB signals for the UWB application with other signals from the radio transmitter with similar frequency. In practice, interference occurs, e.g., when Wi-Fi 6E signals of the radio transmitter (WLAN device) interferes with UWB signals in UWB channel 5, as mentioned above. The interference may cause failures of the UWB application. In practice, e.g., the UWB ranging fails through interference with WLAN signals.

As can be seen from the flow chart, method 100, therefore, provides for obtaining 100, using a UWB receiver, information on a radio signal which is suitable to interfere with the UWB application. For this, the UWB receiver may check through one or more measurements whether a radio signal is present which may interfere with the UWB application. The radio signal can be any electromagnetic wireless signal which may potentially affect the UWB application, i.e., which may have an undesired influence on the UWB application. In practice, the radio signal can be a WLAN signal (i.e., a radio signal from WLAN device or wireless access point) or UWB signal (which is not related to the UWB application). Accordingly, the information on the radio signal may include any information on the radio signal that indicates whether and/or to which extent the radio signal may interfere with the UWB application. In practice, the UWB receiver may be also used for the UWB application. So, any radio signal detectable by the UWB receiver may potentially interfere with the UWB application. The information on the radio signal, in the simplest case, thus, may indicate whether the UWB receiver detected any signal.

Due to its technical design, the UWB receiver may be more sensitive to electromagnetic signals than WLAN devices (e.g., wireless access points or WLAN routers) and, thus, may not only detect WLAN signals but also less strong interfering signals, e.g., (external) UWB signals that may interfere with the UWB application. The UWB receiver can be any UWB device configured to receive UWB signals. So, in some applications, the UWB receiver may be implemented as or correspond to a UWB transceiver also configured to transmit UWB signals.

Method 100 further comprises adjusting 120 the UWB application based on the information on the radio signal such that interference with the radio signal is at least mitigated. In doing so, e.g., one or more parameter that have an influence on the interference with the radio signal may be adjusted such that the UWB application is less interfered by the radio signal than without any adjustment under consideration of the radio signal, i.e., when the UWB application was executed without consideration of the radio signal.

As laid out in more detail later, adjusting the UWB application, e.g., comprises adjusting the UWB application in terms of a frequency, frequency band (channel), and/or time slot used for the UWB application. To this end, the UWB receiver or a data processing circuit processing the information on the radio signal may perform corresponding adjustments of the UWB application, e.g., by transmitting a message indicative of the adjustments to a data processing circuit controlling or executing the UWB application.

In practice, method 100 may be implemented in a vehicle. Accordingly, the UWB application may comprise or correspond to an application of a vehicle. Examples of such applications comprise a (uni- or bidirectional) UWB communication session with a user device for ranging, for presence detection, and/or for accessing/starting/moving the vehicle using the user device. The UWB communication session, in context, of the present disclosure, may be understood as any exchange ("communication") of one or more signals between the vehicle and the user device. Examples of such UWB communications sessions, e.g., comprise a uni- or bidirectional communication of one or more signals for ranging and/or presence detection. In UWB ranging applications, such signals, e.g., may be indicative of a transmission time of the signals. In practice, such signals of the UWB communication session may interfere with the radio signal, e.g., such that the UWB ranging fails. Accordingly, adjusting the UWB application may comprise configuring the UWB communication session based on the information on the radio signal. In vehicles, the radio signal, e.g., is a WLAN or UWB signal from the vehicle (i.e., the same vehicle running the UWB application) or from another vehicle in the surrounding.

Other examples of UWB applications comprise UWB radar.

In some embodiments, the information on the radio signal may be obtained prior to executing of the UWB application. To this end, the UWB receiver, e.g., checks whether a potentially interfering radio signal is present before the UWB application is initiated, for example, before the UWB communication session is established. Accordingly, this may be understood as "UWB-based" LBT. UWB-based LBT, e.g., allows to adjust the UWB application in such a way that no interference occurs at all, i.e., that interference is avoided.

However, interference may also occur while the UWB application is executed. Hence, alternatively or additionally, the information on the radio signal is obtained while the UWB application is being executed. To this end, the UWB receiver, e.g., checks whether an interfering radio signal is present during the UWB communication session, i.e., after the UWB communication session has been established and before the UWB communication session has been torn down. In this way, the interference can be "dynamically" reduced during the UWB application.

In practice, sometimes multiple UWB channels (frequency bands) are available for the UWB application. In vehicles, e.g., UWB channel 5 (central frequency: 6 489.6 MHz; bandwidth: 499.2 MHz) and UWB channel 9 (central frequency: 7 987.2MHz; bandwidth: 499.2 MHz) may be available for the UWB application. Due to better propagation characteristics of electromagnetic waves, UWB channel 5 may be preferred over UWB channel 9 or other UWB channels. By default, therefore, UWB channel 5 may be used. However, in some scenarios, UWB channel 5 may be interfered by a WLAN signal according to the Wi-Fi 6E (6 GHz WLAN) standard, e.g., a WLAN signal in the 6 GHz band (5 925 to 7 125 MHz) while UWB channel 9 is not interfered. In such scenarios, the UWB receiver may detect the WLAN signal and the information on the radio signal may indicate that the UWB receiver detected a potentially interfering radio signal, i.e., that a potentially interfering radio signal is present. In particular, the UWB receiver may be also configured to determine a frequency, a frequency band, and/or a type (here: WLAN signal in the 6 GHz band) of the radio signal in order to determine which of the available UWB channels is/are affected/interfered. In practice, the WLAN signal in the 6 GHz, e.g., only interferes with UWB channel 5 while UWB channel 9 is not interfered. Accordingly, the information on the radio signal may indicate whether a UWB channel and/or which UWB channel is interfered. For example, the information on the radio signal indicates that UWB channel 5 is interfered. Consequently, the UWB application may be adjusted such that UWB channel 5 is avoided, e.g., by selecting and/or switching to UWB channel 9 or any other available UWB channel in order to avoid interference with the detected radio signal. In embodiments, a specific UWB channel may be specifically selected that is less or free of interference according to the information on the radio signal. Hence, the radio signal may "overlap" less or not at all with transmissions for the UWB application in terms of the used frequency. In this way, on one hand interference is avoided or mitigated and, on the other hand, this allows that preferred, although sometimes interfered, UWB channels may still be used for the UWB application. For example, UWB channel 5 may be still used, e.g., when no WLAN signal in the 6 GHz band is present/detected. It is noted that the skilled person having benefit from the present disclosure will appreciate that the proposed concept is not limited to certain UWB channels or a certain number of UWB channels but may be applied to any UWB channels and any number of UWB channels.

In some applications, where the UWB channel cannot be switched "dynamically" during the UWB application, e.g., during the UWB communication session, switching the UWB communication channel may comprise terminating the UWB application (e.g., tearing down the UWB communication session) and restarting or continuing the UWB application using another UWB channel.

Alternatively or additionally, the UWB application can be rescheduled. In practice, e.g., if the information on the radio signal indicates that a potentially interfering radio signal is present, a transmission for the UWB application is delayed until the radio signal disappeared (which may be detected through several measurements). In UWB radar applications, e.g., UWB radar transmissions are only executed when a potentially interfering radio signal is no longer present.

In other embodiments, an alternative predefined time slot for the UWB application may be selected and used. In this way, the execution of the UWB application may overlap less or not at all in terms of time with the radio signal and, thus, interference with the radio signal may be at least reduced or ideally avoided.

In practice, e.g., a certain time slot within a frame including several time slots is provided for UWB transmission/reception for the UWB application. However, the provided time slot may at least partly overlap with the presence of the radio signal. Consequently, interference may occur if the provided time slot was used. As mentioned before, in UWB ranging sessions, such time slots, e.g., correspond to ranging rounds and the frame corresponds to a ranging block.

In UWB ranging applications, method 100, accordingly, may further comprise obtaining information on a first ranging round for a UWB ranging session within a ranging block including the first and at least one alternative second ranging round for the UWB ranging session and that method 100 further comprises obtaining, based on the information on the radio signal and the first ranging round, information on interference of the radio signal with the first ranging round.

In practice, the ranging block is one of a sequence of multiple ranging blocks partitioned in a predetermined number (typically twelve) of sequential discrete ranging rounds having a predefined duration, and the UWB ranging session uses one ranging round per ranging block for transmission and/or reception. To specify the ranging rounds, e.g., a time from the beginning of the respective ranging block (i.e., the ranging block including the respective ranging rounds) to the beginning of a respective ranging round is specified. In some applications, also ranging round hopping is applied which provides that different ranging rounds are used in successive ranging blocks. This time of the ranging rounds, therefore, is also referred to as "hopping offset".

In embodiments, the information on the first ranging round, e.g., indicates the hopping offset of the first ranging round to be used (by default) for transmission/reception for the UWB ranging session. In embodiments, the UWB receiver can, then, check (based on the hopping offset) the presence of a potentially interfering radio signal right at the beginning or before the first ranging round (e.g., a few milliseconds before). If the UWB receiver detects a potentially interfering radio signal, it may be assumed that the first ranging round is or will be interfered by the radio signal. Accordingly, the information on the interference of the first ranging round may indicate that the first ranging round is interfered. Otherwise, if no potentially interfering radio signal is detected, the information on the interference of the first ranging round may indicate that the first ranging round is not interfered.

Then, either the first or the second ranging round is selected for the UWB ranging session based on the information on the interference with the first ranging round. If the first ranging round is not interfered, the first ranging round is selected (and used) for the UWB communication session. Otherwise, in the event that the first ranging round is interfered, the alternative second ranging round in the (same) ranging block may be selected (and used) for the UWB communication session. In practice, the alternative second ranging round may be predetermined. For this, e.g., a so-called "alternative hopping offset" of the second ranging round may be provided/specified.

The skilled person will understand that the second ranging round is later than then first ranging round. In practice, the ranging block, e.g., includes twelve ranging rounds from which one is selected for UWB ranging. In order to avoid interference, it is proposed that the first ranging round is one of a temporally first portion of ranging rounds in the ranging block and that the second ranging round is one of a temporally second portion of ranging rounds in the ranging block. In practice, the ranging block may comprise twelve ranging rounds, the first ranging round may be one of the temporally first six ranging rounds, and the second ranging round may be one of the temporally second six ranging rounds. Alternatively or additionally, a predefined time, e.g., a predefined number of ranging rounds between the first and the second ranging rounds is provided.

According to another aspect of the present disclosure, it may be refrained from adapting the UWB application. In some scenarios, the interference by the radio signal may be acceptable, e.g., when the expected interference does not lead to noticeable or unacceptable effects on the UWB application and/or when the interference can be corrected or filtered out. In practice, the interference may be acceptable if the UWB application still serves its purpose. For UWB ranging, e.g., this is the case, if a position and/or distance still can be determined (with a certain accuracy). In such scenarios, adjustments of the UWB application can be dispensed with. Accordingly, it is decided based on the information on the radio signal whether the UWB applications is adjusted.

For this, the information on the radio signal may comprise information on a level of interference. The strength of interference may be also understood as a degree or strength of interference. The information on the level of interference may indicate whether the expected interference is acceptable and, thus, whether any adjustments of the UWB application may be required. The information on the level of interference, e.g., is indicative of a signal to interference ratio (SIR) or any other measure indicating the level of interference.

The UWB application may be adjusted based on the information on the level of interference. In practice, the UWB application, e.g., is only adjusted if the information on the interference indicates that the interference is not acceptable, e.g., if the SIR exceeds a threshold indicative of a maximum acceptable interference. Otherwise, if the interference is acceptable, the UWB application is not adjusted. In embodiments, this threshold is equal to or greater than -25 dB.

In some embodiments, a distinction is made between weak, medium, strong, and very strong interference and the interference may be separately determined for each device involved in the UWB application. In embodiments of method 100, the UWB application, e.g., involves a vehicle and a user device. Accordingly, the level of interference may be separately determined for the vehicle and the user device. The interference, then, may be considered acceptable for various constellations in terms of the level of interference at the vehicle and at the user device. For example, the interference is considered acceptable if the interference at the vehicle is lower than or equal to medium and if the interference at the user device is lower than or equal to weak, or vice versa. In other embodiments, also other constellations may be considered acceptable/unacceptable.

An interference having a SIR lower than or equal to -50 dB is considered "weak", an interference having a SIR lower than or equal to -25 dB is considered "medium", an interference having a SIR lower than or equal to 0 dB is considered "strong", and an interference having a SIR greater than 0 dB is considered "very strong".

To better assess the radio signal and the (potential) interference, the UWB receiver may monitor the environment continuously or frequently and various measurements of the UWB receiver may be weighted differently depending on their measurement time relative to the execution of the UWB application. In some embodiments, e.g., the latest measurements of the UWB receiver (right) before the UWB application is to be executed may be weighted higher than earlier measurements.

As the skilled person will appreciate, method 100 can be applied in various UWB applications. In embodiments, method 100 may be applied in UWB applications involving a vehicle and a user device, e.g., in UWB ranging applications for determining a presence, a distance, and/or a position of the user device relative to the vehicle. As well, the skilled person will appreciate that method 100 can be executed by anyone, some, or all devices which are configured to adjust the UWB application. In UWB applications involving a vehicle and a user device, method 100 may be executed by the vehicle, by the user device, or both the vehicle and the user device.

As the skilled person will appreciate, method 100 may be also implemented in a computer program (product) having a program code for performing an embodiment of the proposed method, when the computer program is executed on a computer, a processor, or a programmable hardware component.

The proposed concept should be explained in more detail below with reference to an exemplary use case illustrated by Fig. 2.

As can be seen in Fig. 2, in the exemplary use case, a user device 210 and a vehicle 220 are supposed to communicate in a UWB communication session (indicated by a double arrow numbered "230"), e.g., for UWB ranging or presence detection. However, a WLAN signal 242 of a WLAN device 240 may potentially interfere with the UWB communication session 230 which may have an undesired impact on the UWB communication session. The WLAN device 240, e.g., is a WLAN router and may be installed in vehicle 220. Alternatively, the WLAN device 240 belongs to another vehicle or to infrastructure in the surrounding. In practice, the interference may lead to data/information loss and/or failures. In such use cases, the proposed concept may be applied in order to reduce such data/information loss and/or failures.

For UWB communication, the user device 210 and the vehicle 220 may be equipped with appropriate UWB devices (not shown). In practice, at least one or both of the vehicle 220 and the user device 210 are equipped with a UWB receiver or UWB transceiver (not shown) and appropriate software for a UWB communication session 230 between the user device 210 and the vehicle 220. As well, the UWB communication session, i.e., a UWB channel, UWB transmission, and/or reception, may be controlled by one or both of the user device 210 and the vehicle 220. So, the user device 210 and/or the vehicle 220 may be configured to detect potentially interfering signals and to adapt the UWB transmission and/or reception for interference mitigation according to the proposed concept. So, as the skilled person will appreciate, the proposed concept may be applied by the user device 210, the vehicle 220, and/or both the user device 210 and the vehicle 220. As well, the user device 210 and the vehicle 220 may collaborate in a complementary manner.

In the present use case, e.g., the UWB communication session 230 serves ranging, i.e., determining a distance and/or position of the user device 210 relative to the vehicle 220 in order to make sure that the user device 210 cannot lock/unlock, start, and/or move the vehicle 220 from too far away (i.e., more than a certain maximum distance away) using the user device 210. To this end, as the skilled person having benefit from the present disclosure will understand, the user device 210 and the vehicle 220 may communicate UWB signals in the UWB communication session 230 and determine, based on the UWB signals, the distance and/or relative position of the user device 210. However, the ranging may be interfered by the WLAN signal 242 of the WLAN device 240, e.g., when the UWB signals and the WLAN signal 242 are emitted simultaneously. In practice, e.g., the WLAN signal 242 interferes with the UWB signals such that the ranging fails. This may be avoided according to the proposed concept of interference mitigation.

To this end, information on a potentially interfering radio signal is obtained. For this, at least one of the UWB receivers or transceivers measures whether such a radio signal is present just before or during a planned transmission or reception of UWB signals for the UWB communication session 230. If so, the information indicates that the planned transmission or reception may be interfered. In the present example, e.g., the WLAN signal 242 is detected just before or after the UWB communication session 230 is established. Accordingly, the information on the radio signal may indicate that the WLAN signal 242 may interfere with the UWB communication session 230. Consequently, based on this information, one or more of the proposed measures for interference mitigation may be taken. In doing so, e.g., the UWB communication session 230 is configured and/or timed/rescheduled such that the WLAN signal 242 at least interferes less with the UWB communication session 230, as laid out above in more detail. In this way, the interference may be reduced such that the ranging is successful.

It is noted that the user device 210 as well as the vehicle 220 both may be configured to take the proposed interference mitigation measures, e.g., the user device 210 as well as the vehicle 220 may be capable of selecting or changing the UWB channel and/or timing/rescheduling the UWB communication session 230.

It is further noted that the use case of Fig. 2 is only one of multiple exemplary use cases for the proposed concept. In practice, the proposed concept is not only limited to vehicle-related UWB applications and may be applied to any kind of UWB application and any type of UWB devices. As well, the proposed concept may be applied to any kind of interference, in particular, to any kind of radio signals that may interfere with the UWB application. As well, the proposed concept can be applied for mitigation of interference by interfering devices that cannot be adjusted under consideration of the UWB application, e.g., external devices which are not installed in or controlled by the vehicle or the user device (see Fig. 2).

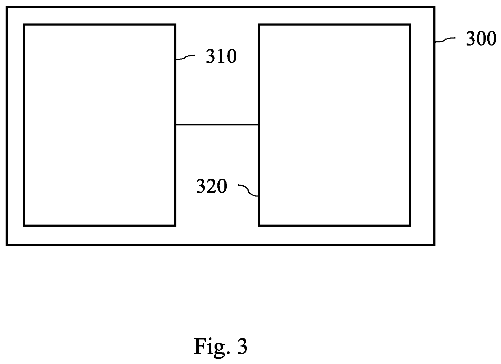

As the skilled person will understand, the proposed concept can be also implemented in a respective apparatus, as stated in more detail below with reference to Fig. 3.

Fig. 3 shows a block diagram schematically illustrating an embodiment of an apparatus 300 implementing the proposed concept.

As can be seen from Fig. 3, apparatus 300 comprises one or more interfaces 310 for communication and a data processing circuit 320 configured to control the one or more interfaces 310. The data processing circuit 320 is further configured to control the one or more interfaces 310 and execute, using the one or more interfaces 310, an embodiment of method 100.

In embodiments the one or more interfaces 310 may comprise means for communication with vehicles or another server. For this, the one or more interfaces 310 may comprise or correspond to any means for obtaining, receiving, transmitting, or providing analog or digital signals or information, e.g., any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 310 may comprise further components to enable according communication, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, and/or the like. The one or more interfaces 310 may be coupled to one or more antennas, which may correspond to any transmit and/or receive antennas, such as horn antennas, dipole antennas, patch antennas, sector antennas, and/or the liked. The antennas may be arranged in a defined geometrical setting, such as a uniform array, a linear array, a circular array, a triangular array, a uniform field antenna, a field array, combinations thereof, and/or the like.

As shown in Fig. 3, the one or more interfaces 310 are coupled to the data processing circuit 320. In embodiments the data processing circuit 320 may comprise any means for processing information according to the proposed method. The data processing circuit 320 may be implemented using one or more processing units, one or more processing devices, any means for processing, such as a processor, a computer or a programmable hardware component being operable with accordingly adapted software. In other words, the described functions of the data processing circuit 320 may as well be implemented in software, which is then executed on one or more programmable hardware components. Such hardware components may comprise a general-purpose processor, a Digital Signal Processor (DSP), a micro-controller, and/or the like.

A person of skill in the art would readily recognize that steps of various above-described methods can be performed by programmed computers. In some embodiments, the apparatus may also comprise program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of those.

The apparatus 300, in practice, may be implemented in a user device (e.g., user device 210) or a vehicle (e.g., vehicle 220).

### References

- 100: method
- 110: obtaining information on a radio signal
- 120: adjusting the UWB application
- 210: user device
- 220: vehicle
- 230: UWB communication session
- 240: WLAN device
- 242: WLAN signal
- 300: apparatus
- 310: one or more interfaces
- 320: data processing circuit

## Claims

1. A method (100) for mitigation of interference on an ultra-wideband, UWB, application, the method (100) comprising:
obtaining (110), using a UWB receiver, information on a radio signal which is suitable to interfere with the UWB application; and
adjusting (120) the UWB application based on the information on the radio signal such that interference with the radio signal is at least mitigated.

2. The method (100) of claim 1, wherein obtaining (110) the information on the radio signal comprises obtaining the information on the radio signal prior to executing of the UWB application.

3. The method (100) of claim 1 or 2, wherein obtaining (110) the information on the interference comprises obtaining the information on the radio signal while executing the UWB application.

4. The method (100) of any one of the preceding claims, wherein the UWB application comprises a UWB communication session (230) between a vehicle (220) and a user device (210), and wherein adjusting the UWB application comprises configuring the UWB communication session (230) based on the information on the radio signal.

5. The method (100) of claim 4, wherein a first and at least one second UWB channel are available for the UWB communication session (230), wherein the information on the radio signal comprises information on an interference of the radio signal with at least one of the first and the second UWB channel, and wherein configuring the UWB communication session (230) comprises selecting one of the first and the second UWB channel for the UWB communication session (230) based on the information on the interference with at least one of the first and the second UWB channel.

6. The method (100) of any one of the preceding claims, wherein adjusting the UWB application comprises rescheduling the UWB application based on the information on the radio signal.

7. The method (100) of claim 4, wherein the UWB communication session (230) includes a UWB ranging session, and wherein the method further comprises obtaining information on a first ranging round for the UWB ranging session within a ranging block including the first and at least one alternative second ranging round for the UWB ranging session, wherein the method (100) further comprises obtaining, based on the information on the radio signal and the first ranging round, information on interference of the radio signal with the first ranging round, and wherein configuring the UWB ranging session comprises selecting the first or the second ranging round for the UWB ranging session based on the information on the interference with the first ranging round.

8. The method (100) of any one of the preceding claims, wherein the radio signal is a wireless local area network, WLAN, signal.

9. The method (100) of any one of the preceding claims, wherein the information on the radio signal comprises information on a level of interference, and wherein adjusting (120) the UWB application comprises adjusting the UWB application based on the information on the level of interference.

10. The method (100) of claim 4, wherein the method is executed by the vehicle (220) and/or the user device (210).

11. A computer program having a program code for performing at least one embodiment of the method (100) of the preceding claims, when the computer program is executed on a computer, a processor, or a programmable hardware component.

12. An apparatus (300) comprising:
one or more interfaces (310) for communication;
a data processing circuit (320) configured to:
control the one or more interfaces (310); and
execute, using the one or more interfaces (310), one embodiment of the method (100) of the claims 1 to 10.

13. A user device (210) comprising the apparatus (300) of claim 12.

14. A vehicle (220) comprising the apparatus (300) of claim 12.
